# EUROPÄISCHE PATENTSCHRIFT

(11) **EP 1 034 865 B1**
(45) Veröffentlichungstag und Bekanntmachung des Hinweises auf die Patenterteilung: **22.08.2001**
(21) Anmeldenummer: 99810202.4
(22) Anmeldetag: 08.03.1999
(51) Int. Cl.: B23C 3/18, B23C 3/00

(54) **Fräsverfahren**
Milling method
Méthode de fraisage

(43) Veröffentlichungstag der Anmeldung: 13.09.2000
(73) Patentinhaber: ALSTOM (Schweiz) AG, 5400 Baden (CH)
(72) Erfinder: Fenkel, Hartmut, 70182, Stuttgart (DE); Probst, Martin, 4717 Mümliswil (CH); Slepcevic, Paul, 5415 Nussbaumen (CH)
(74) Vertreter: Pöpper, Evamaria, Dr.

(56) Entgegenhaltungen:
- FR-A- 2 287 962

## Beschreibung

### Technisches Gebiet

Die Erfindung betrifft ein Fräsverfahren zur Herstellung eines beliebigen Fertigteils aus einem beliebigen Rohteil mittels einem Fräswerkzeug (siche Z,B. FR-A 2 287 862) durch eine kontinuierliche Annäherung von der Rohteilform an die Fertigteilform durch stetige Materialabnahme sowie ein Verfahren zur Erzeugung von Führungsbahnen für ein in dem Fräsverfahren verwendeten Fräswerkzeug. Die Verfahren finden insbesondere Verwendung in der Fertigung von Turbinenschaufeln.

### Stand der Technik

Der Stand der Technik von Fräsverfahren wird hier anhand der Herstellung von Turbinenschaufeln dargelegt.
Turbinenschaufeln verschiedener Grössen werden zum Beispiel aus quaderförmigen Rohteilen gefertigt. Hierfür werden zunächst ebenflächige Stücke und Ecken des Rohteils abgefräst, um eine erste, grobe Polygon-förmige Annäherung an die Schaufelform zu erreichen. Das Fräswerkzeug wird sodann entlang mehreren Führungsbahnen oder Führungsbahnstücken geführt, die jeweils entlang äquidistanten Flächen verlaufen. Durch das Fräsen mehrerer solcher äquidistanten Flächen wird die Form des Fertigteils in Stufen erreicht. Die Führungsbahn ist dabei durch diskrete Punkte und/oder Kurvenstücke definiert.

Eine Schaufel wird nach diesem Verfahren stückweise und unter häufigem Abheben und erneutem Ansetzen des Fräswerkzeugs gefertigt. Dies hat zur Folge, dass das Fräswerkzeug sich während eines bedeutenden Zeitraums durch die Luft bewegt und während dieser Zeit keine Zerspanung stattfindet.
Eine Verkürzung der Bearbeitungszeit durch Erhöhung der Fräsgeschwindigkeit wird durch die damit verbundene Bearbeitungszeitabnahme der verwendeten Fräswerkzeuge begrenzt.
Der Einsatz von keramischen Werkzeugen ist in diesem traditionellen Fräsverfahren nicht möglich, da dort die Fräsbahnen durch häufiges Abheben und Ansetzen des Werkzeugs oft zu einem unsteten und ruckartigen Verlauf des Fräsprozesses führen. Da Keramik bekanntlich sehr bruchempfindlich ist und das Fräswerkzeug entlang der Fräsbahn oft Schläge erfährt, eignet es sich für dieses Fräsverfahren nicht.

### Darstellung der Erfindung

Es ist die Aufgabe der Erfindung, ein Fräsverfahren zur Herstellung eines Fertigteils beliebiger Kontur aus einem beliebigen Rohteil zu schaffen, welches die Nachteile des eingangs beschriebenen Verfahrens vermeidet. Es ist insbesondere das Ziel der Erfindung, die Bearbeitungszeit des Werkstücks zu verkürzen und die Fräswerkzeuge schonender einzusetzen.
Diese Aufgabe ist erfindungsgemäss durch ein Fräsverfahren gelöst, bei dem das Fräswerkzeug entlang einer kontinuierlichen spiralförmigen Führungsbahn von der Aussenkontur des Rohteils zur Kontur des Fertigteils geführt wird und unter stetigem Materialabtrag eine kontinuierliche Gestaltänderung vom Rohteil zum Fertigteil erreicht wird.

Das Fräswerkzeug wird entlang einer Führungsbahn dieser Art geführt, wodurch eine Fräsbahn erzeugt wird, die ebenfalls kontinuierlich und grundsätzlich spiralförmig ist. Die resultierende Fräsbahn kann durch Neigung des Fräswerkzeugs von der durchlaufenen Führungsbahn abweichen, wobei jedoch die Kontinuierlichkeit beibehalten wird.
Die spiralförmige Führungsbahn ermöglicht eine kontinuierliche Gestaltänderung unter stetiger Materialabtragung vom Werkstück, wobei das Werkzeug nur einmal angesetzt werden muss. Der vollständige Fräsvorgang kann somit in einer einzigen Aufspannung des Werkstücks erfolgen.
Die spiralförmige Führungsbahn zeichnet sich insbesondere durch einen weichen und sanften Verlauf aus, der frei von ruckartigen Richtungsänderungen ist. Dies ist die Voraussetzung für eine harmonische Führung von Werkstück und Werkzeug, die frei von ruckartigen Beschleunigungen und damit verbundenen Vibrationen ist. Hierzu wird die Geschwindigkeit des Werkzeugs und -stücks der Krümmung der Führungsbahn angepasst.

Der Hauptvorteil des erfindungsgemässen Verfahrens liegt in der Verkürzung der Bearbeitungszeit des Werkstücks und somit einer kostengünstigeren Fertigung. Dies ist in erster Linie auf die kontinuierliche Materialabtragung zurückzuführen. Im Vergleich zu bekannten Verfahren ist die Volumenabtragung pro Zeiteinheit höher, da das Werkzeug sehr wenig oder gar nicht durch die Luft geführt wird. Die gesamte Bearbeitungszeit wird weiter verkürzt, indem das Werkstück nur noch einmal eingespannt wird. Dadurch ist auch nur ein Satz von Spannstellen erforderlich, was das Verfahren weiter vereinfacht.

Ein weiterer Vorteil liegt in der weichen Werkzeugführung, wodurch Stösse auf das Werkzeug vermieden werden und demzufolge der Einsatz von Keramikwerkzeugen ermöglicht wird. Dank ihrer Hitzebeständigkeit lassen sich höhere Fräsgeschwindigkeiten realisieren, was zu einer weiteren Verkürzung der Fräszeit führt.
Die kontinuierliche Materialabtragung und Gestaltänderung erbringen ferner den Vorteil eines geringeren Verzugs des Werkstücks.
Das erfindungsgemässe Fräsverfahren lässt sich auf bestehenden fünf- oder vierachsigen Werkzeugmaschinen ausführen. Die Anzahl der verwendeten Achsen hängt dabei von der Komplexität der Flächenkrümmung ab. Während einfache Teile wie Spannstellen auf vier Achsen fräsbar sind, erfordert die Fertigung einer verdrehten Turbinenschaufel ein Fräsen entlang fünf Achsen.

### Kurze Beschreibung der Zeichnungen

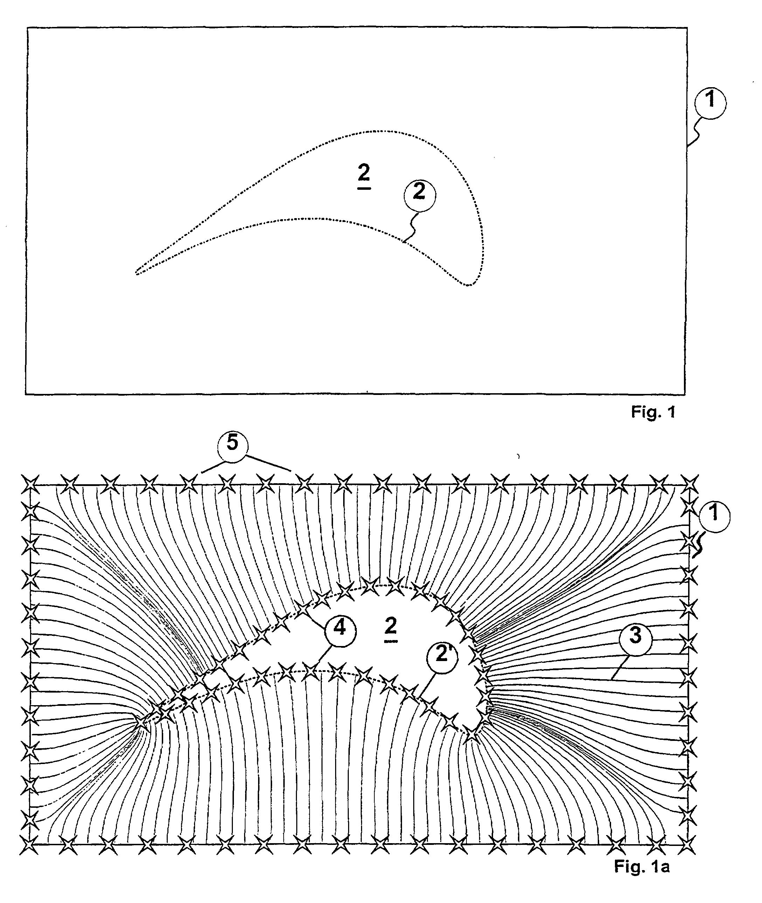

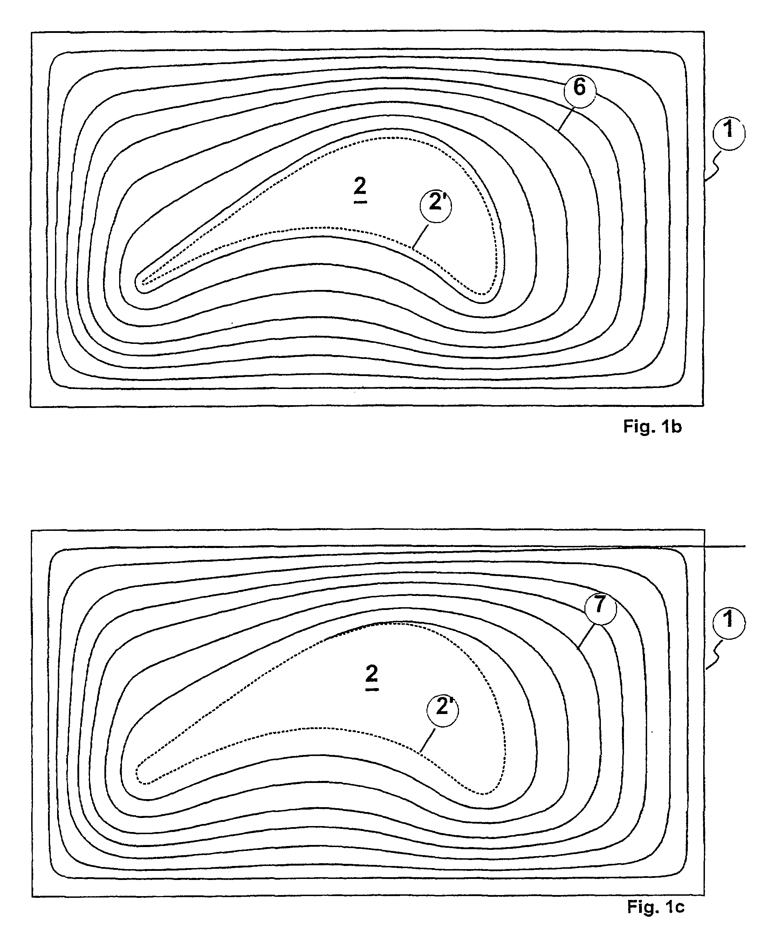

Figur 1 zeigt einen Schnitt eines quaderförmigen Rohteils mit einem typischen Profil einer Turbinenschaufel.
Figur 1a, b, und c zeigen je einen Querschnitt eines Rohteils und einer fertigen Turbinenschaufel, wovon folgendes dargestellt ist:
Figur 1a: erste Hilfslinien zur Erstellung einer spiralförmigen, zweidimensionalen Führungsbahn,
Figur 1b: weitere Hilfslinien zur Annäherung an eine spiralförmige, zweidimensionale Führungsbahn,
Figur 1c: eine erfindungsgemässe spiralförmige, zweidimensionale Führungsbahn.
Figur 2a, b und c zeigen dreidimensional je einen Umriss einer fertigen Turbinenschaufel und eines Rohteils mit verschiedenen Varianten zur Erzeugung von erfindungsgemässen spiralförmigen Führungsbahnen, wovon folgendes dargestellt ist:

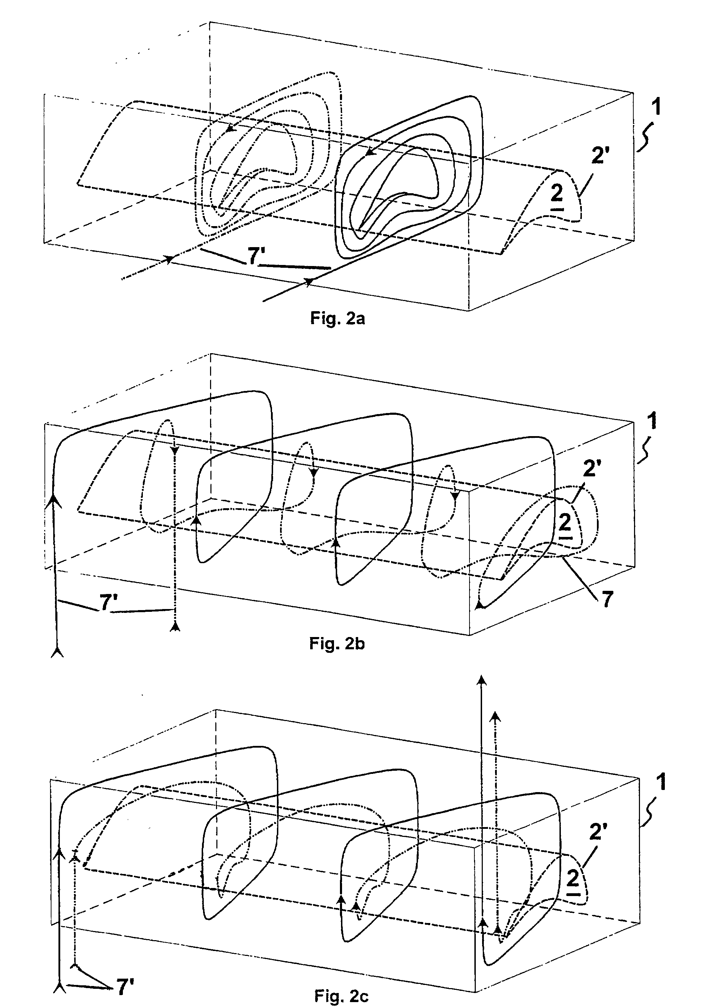

Figur 2a: eine Führungsbahn bestehend aus einer Serie von ebenen, zweidimensionalen Spiralen,
Figur 2b: eine Führungsbahn bestehend aus einer dreidimensionalen Spirale (Doppelspirale) in Längsrichtung der Turbinenschaufel, die nach Erreichen des Werkstückendes in der Längsrichtung in entgegengesetzter Richtung verläuft,
Figur 2c: eine Führungsbahn bestehend aus einer sich wiederholenden dreidimensionalen Spirale in Längsrichtung der Turbinenschaufel, die stets in gleicher Längsrichtung der Schaufel verläuft.

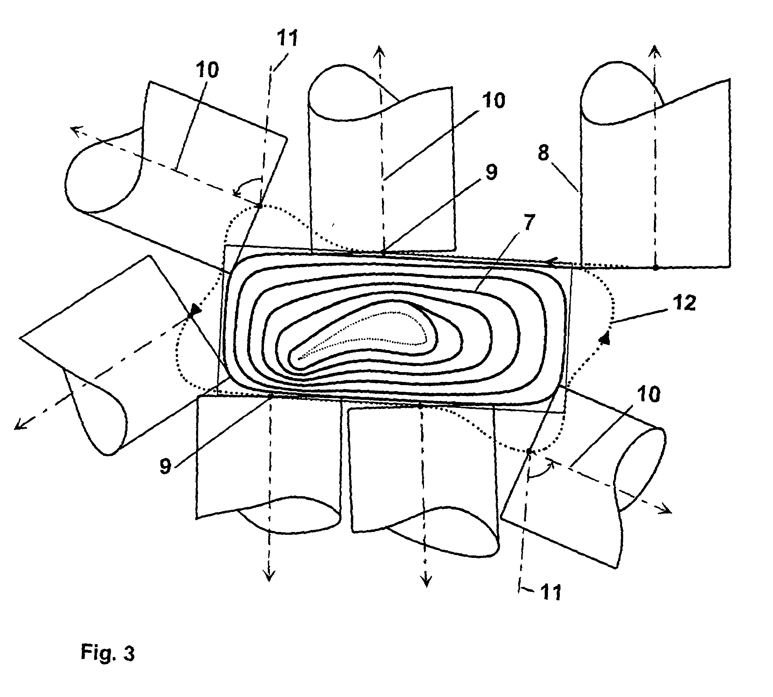

Figur 3 zeigt eine Darstellung eines Fräswerkzeugs auf einer erfindungsgemässen Führungsbahn sowie der resultierenden Fräsbahn.

### Wege der Ausführung der Erfindung

Zu dem erfindungsgemässen Fräsverfahren wird zunächst ein effizientes Verfahren zur Erzeugung der dazu verwendeten Führungsbahnen beschrieben. Im zweidimensionalen Fall ergibt sich daraus direkt die spiralförmige Fräsbahn. Im dreidimensionalen Fall dienen die erzeugten Führungsbahnen der Erzeugung von Führungsflächen, auf denen sich dann mehrere Varianten von Führungsbahnen erzeugen und Fräsbahnen realisieren lassen.
Figur 1 zeigt im Schnitt die Kontur eines Rohteils 1 sowie die Kontur einer zu erreichenden fertigen Turbinenschaufel 2.
Figur 1a zeigt denselben Schnitt durch ein Rohteil 1 eines Werkstücks und die fertige Turbinenschaufel 2 mit einem Profil 2'. Zur Bestimmung einer spiralförmigen Führungsbahn werden zunächst Hilfslinien 3 zwischen der Profillinie 2' des Fertigteils 2 und der Profillinie des Rohteils 1 gelegt. In der gezeigten Ausführung verlaufen diese Hilfslinien 3 gleich elektrostatischen Feldlinien zwischen imaginären elektrischen Ladungen 4 auf der Profillinie der Schaufel 2 und imaginären elektrischen Ladungen 5 entgegengesetzten Vorzeichens auf der Profillinie des Rohteils 1.
Figur 1b zeigt das gleiche Rohteil 1 mit dem Profil 2' der fertigen Turbinenschaufel 2. Wiederum, in Anlehnung an die Elektrostatik, werden weitere Hilfslinien 6 zwischen dem Schaufelprofil und dem Rohteilprofil gelegt. Diese Hilfslinien 6 entsprechen Äquipotentiallinien 6, die jeweils senkrecht zu den Feldlinien 3 von Figur 1a verlaufen. Entsprechend ihrem Potentialwert bilden die Linien 6 eine harmonische Annäherung von der Rohteilform an die Fertigteilform ohne abrupte Richtungsänderungen entlang der Führungsbahn.

Eine kontinuierliche, spiralförmige Führungsbahn vom Rohteil zum Fertigteil wird nun durch eine lokale Änderung und Verbindung der einzelnen Äquipotentiallinien erzeugt, sodass sich die Führungsbahn 7, wie in Figur 1c gezeigt, ergibt. Sie beginnt auf dem Rohteilprofil und umläuft stetig das zu fertigende Schaufelprofil 2', indem sie sich dem gewünschten Profil 2' stetig annähert und diese schliesslich erreicht. Sie führt dabei nicht durch die Luft ausserhalb des Rohteils 1. In einer Variante zu diesem Verfahren wird zur Erzeugung einer erfindungsgemässen Führungsbahn von den Hilfslinien 3 von Figur 1a, also den elektrostatischen Feldlinien ähnlichen Hilfslinien 3, ausgegangen. Anstelle der Äquipotentiallinien wird eine eindeutige spiralförmige Funktion erzeugt, die gleich einer kontinuierlichen Variierung des elektrostatischen Potentials zwischen den beiden Profillinien sich allmählich vom Profil des Rohteils dem Profil des Fertigteils nähert.

Am dreidimensionalen Werkstück können die Führungsbahnen für das erfindungsgemässe Fräsverfahren nach verschiedenen Varianten erzeugt werden. Figur 2a zeigt eine erste Variante, bei der die zweidimensionale Führungsbahn 7 von Figur 1c wiederholt versetzt angewendet wird.
Die Turbinenschaufel wird bei Verfolgung dieser Führungsbahn scheibenweise gefräst. Die Breite einer einzelnen Spirale oder abgefrästen Scheibe entspricht dabei der Breite des Fräswerkzeugs. Über dieser Breite wird also entlang einer ebenen, spiralförmigen Führungsbahn bis zur gewünschten Profilfläche des Fertigteils gefräst. Das Werkzeug wird sodann abgehoben und an den Anfangspunkt der nächsten ebenen Spiralbahn oder abzutragenden Scheibe bewegt. Dies wird so oft wiederholt bis die Schaufel über ihrer gesamten Länge gefräst worden ist.
In der Figur 2a wird eine Wiederholung der gleichen ebenen Spiralkurve 7 entlang der gesamten Länge der Turbinenschaufel dargestellt. Ebene Spiralkurven sind auch bei tordierten Turbinenschaufeln anwendbar, indem die einzelnen, zweidimensionalen Spiralkurven entlang der Turbinenlänge verändert werden. Figur 2b zeigt dreidimensionale Führungsbahnen 7, die je auf einer von mehreren Führungsflächen, die gleich Äquipotentialflächen zwischen der Fläche des Rohteils und der Fläche des Fertigteils liegen, als dreidimensionale Spiralkurve erzeugt worden sind. Im Fall einer Turbinenschaufel verlaufen diese in Längsrichtung der Schaufel. Am Ende der Spiralkurve 7' in Längsrichtung wird die darunterliegende Äquipotentialfläche in einer ebenen Spiralkurve 7 erreicht. Die nächste Spiralkurve 7' verläuft nun in entgegengesetzter Richtung. Es wird also eine Doppelspirale gebildet. Beim Fräsen werden die Spiralkurven jeweils in alternierender Richtung durch Anwendung von Gleich- und Gegenlauffräsen durchlaufen, wodurch ein ununterbrochener Materialabtrag erzielt wird.
Figur 2c stellt eine weitere Variante dar, bei der die dreidimensionalen Spiralkurven 7' in Längsrichtung verlaufen, wobei die Richtung sämtlicher Spiralkurven gleich ist. Beim Fräsen wird das Fräswerkzeug entlang einer Spiralkurve in dieser Richtung geführt, wobei nach Erreichen des Endes dieser Spiralkurve 7' das Werkzeug abgehoben und in der Luft an den Anfangspunkt zurückgebracht und entlang der nächsten Spiralkurve auf der nächsten, tiefer-liegenden Äquipotentialfläche weitergeführt wird.

Nach der Berechnung der Führungsbahn muss die Ausrichtung der Werkzeugsachse festgelegt werden. Bei der zweidimensionalen Bearbeitung geschieht dies durch das Kreuzprodukt vom Tangentenvektor an der Spiralkurve des jeweils bestimmten Berührungspunkts und dem Normalenvektor der Bearbeitungsebene. Die Werkzeugachse wird dann bezüglich des Vektors aus diesem Kreuzprodukt um einen Sturzwinkel in Vorschubrichtung geneigt.
Im dreidimensionalen Fall erfolgt die Ausrichtung der Werkzeugsachse durch den Normalenvektor der Äquipotentialfläche im Berührungspunkt. Die Werkzeugachse wird sodann bezüglich diesem Normalenvektor um einen Sturzwinkel in Vorschubrichtung geneigt, wobei sie zusätzlich auch seitwärts gekippt werden kann.
In Figur 3 ist ein Fräswerkzeug 8 gezeigt, wie es in dem erfindungsgemässen Fräsverfahren eingesetzt wird. Der Übersichtlichkeit halber ist nur ein Umgang in einer Ebene des Werkstücks gezeigt. Das Werkzeug ist in dem Berührungspunkt 9 auf dem Werkstück angesetzt und wird entlang der Führungsbahn 7 bewegt. Während dem Fräsen kann die Werkzeugsachse 10 um einen Sturzwinkel vom Normalenvektor 11 im Berührungspunkt 9 nach vorne in Richtung der Führungsbahn 7 geneigt sowie um einen Neigewinkel vom Normalenvektor 11 seitwärts, aus der Ebene der Figur, gekippt werden. Aufgrund dieser Neigung und des Kippens entsteht eine resultierende, punktiert angedeutete Fräsbahn 12, die sich von der Führungsbahn 7 unterscheidet.

Die scheibenweise Bearbeitung mittels zweidimensionalen Führungsbahnen nach der ersten Variante von Figur 2a erfolgt entlang einer durch vier Achsen bestimmte Fräsbahn und ist mit einer Maschine mit drei linearen und einer Rotationsachse ausführbar. Die dreidimensionale Bearbeitung nach der zweiten und dritten Variante erfordert eine Maschine mit drei linearen Achsen und zwei Rotationsachsen. Je nach Kinematiktyp der Fräsmaschine wird entweder das Fräswerkzeug um das Rohteil herumgeführt, das Rohteil auf einer Rotationsachse unter dem Fräswerkzeug gedreht oder es wird nach einer Kombination aus diesen beiden Möglichkeiten gefräst.
Das erfindungsgemässe Verfahren ist für Schruppen sowie Schlichten gleichsam anwendbar. Für das Schlichten erlaubt das Verfahren dank der weichen Fräsbahn ein Hochgeschwindigkeitsfräsen (high speed cutting). Der resultierende Volumenabtrag pro Zeiteinheit ist dabei grösser, da das erfindungsgemässe Fräsverfahren schneller und durch die stetige Materialabtragung effizienter ist.

### Bezugszeichenliste

- 1: Rohteil
- 2: Turbinenschaufel
- 2': Profil der Turbinenschaufel
- 3: Feldlinien, erste Hilfslinien
- 4: Ladungen von erstem Vorzeichen
- 5: Ladungen von entgegengesetztem Vorzeichen
- 6: Äquipotentiallinien, zweite Hilfslinien
- 7: Spiralbahn, eben, zweidimensional
- 7': Doppelspiralbahn, dreidimensional
- 8: Fräswerkzeug
- 9: Berührungspunkt
- 10: Werkzeugachse
- 11: Normalenvektor
- 12: Fräsbahn

## Patentansprüche

1. Fräsverfahren zur Herstellung eines beliebigen Fertigteils (2) aus einem beliebigen Rohteil (1) mittels einem Fräswerkzeug
dadurch gekennzeichnet, dass
das Fräswerkzeug entlang einer kontinuierlichen spiralförmigen Führungsbahn (7, 7') von der Aussenkontur des Rohteils (1) zur Kontur (2') des Fertigteils (2) geführt wird und unter stetigem Materialabtrag eine kontinuierliche Gestaltänderung vom Rohteil (1) zum Fertigteil (2) erreicht wird.

2. Fräsverfahren nach Anspruch 1
dadurch gekennzeichnet, dass
die kontinuierliche Führungsbahn (7, 7') als zweidimensionale, ebene, spiralförmige Führungsbahn (7) oder als dreidimensionale, spiralförmige Führungsbahn (7') ausgebildet ist.

3. Fräsverfahren nach Anspruch 2
dadurch gekennzeichnet, dass
das Fräswerkzeug entlang einer ersten zweidimensionalen, spiralförmigen Führungsbahn (7) zwischen der Profillinie des Rohteils (1) und der Profillinie (2') des Fertigteils (2) kontinuierlich geführt wird und dadurch eine Scheibe von Material kontinuierlich abgetragen wird, das Fräswerkzeug sodann wieder an die Profillinie des Rohteils (1) zurückgebracht, entlang der Längsachse des Fertigteils (2) verschoben wird und wiederum eine Scheibe von Material entlang einer weiteren spiralförmigen, zweidimensionalen Führungsbahn (7) bis zur Profillinie (2') des Fertigteils (2) kontinuierlich entfernt wird und dieser Vorgang wiederholt wird bis die gesamte Länge des Fertigteils (2) gefräst worden ist.

4. Fräsverfahren nach Anspruch 3
dadurch gekennzeichnet, dass
die durchlaufenen, zweidimensionalen, spiralförmigen Führungsbahnen (7) entlang der Längsachse des Fertigteils (2) jeweils gleich sind.

5. Fräsverfahren nach Anspruch 3
dadurch gekennzeichnet, dass
die durchlaufenen, zweidimensionalen, spiralförmigen Führungsbahnen (7) entlang der Längsachse des Fertigteils (2) jeweils unterschiedlich sind.

6. Fräsverfahren nach Anspruch 2,
dadurch gekennzeichnet, dass
das Fräswerkzeug entlang einer ersten dreidimensionalen, spiralförmigen Führungsbahn (7') in einer Längsrichtung des Fertigteils (2) geführt wird und nach Erreichen des Endes des Fertigteils (2) von diesem abgehoben wird und durch die Luft an den Beginn einer nächst tieferliegenden dreidimensionalen, spiralförmigen Führungsbahn (7') und entlang dieser Führungsbahn (7') bewegt wird und dieser Vorgang so oft wiederholt wird bis das Profil (2') des Fertigteils (2) erreicht worden ist.

7. Fräsverfahren nach Anspruch 2
dadurch gekennzeichnet, dass
das Fräswerkzeug entlang einer ersten dreidimensionalen, spiralförmigen Führungsbahn (7') in Längsrichtung des Fertigteils (2) bewegt wird und nach Erreichen des Endes des Fertigteils (2) entlang einer zweidimensionalen, spiralförmigen Führungsbahn (7) zur nächst tieferliegenden dreidimensionalen, spiralförmigen Führungsbahn (7') bewegt wird und sodann entlang dieser dreidimensionalen Führungsbahn in entgegengesetzter Längsrichtung bewegt wird und dieser Vorgang so oft wiederholt wird bis das Profil (2') des Fertigteils (2) erreicht worden ist.

8. Fräsverfahren nach einem der vorangehenden Ansprüche
dadurch gekennzeichnet, dass
während dem Fräsen die Achse (10) des Fräswerkzeugs (8) um einen Sturzwinkel vom Normalenvektor (11) im Berührungspunkt (9) des Fräswerkzeugs (8) auf der bearbeiteten Fläche des Rohteils (1) in Richtung der Führungsbahn (7, 7') nach vorn geneigt und um einen Neigewinkel vom Normalenvektor (11) von der Führungsbahn (7, 7') seitwärts gekippt wird, und die aus dem Fräsen resultierende Fräsbahn (12) von der Fürhungsbahn (7, 7') unterschiedlich ist.

9. Fräsverfahren nach einem der vorangehenden Ansprüche
dadurch gekennzeichnet, dass
das gesamte Fräsverfahren vom Rohteil (1) zum Fertigteil (2) in einer einzigen Aufspannung erfolgt.

10. Fräsverfahren nach einem der vorangehenden Ansprüche
dadurch gekennzeichnet, dass
für das Fräsverfahren ein Keramikfräswerkzeug verwendet wird.

11. Verwendung des Fräsverfahrens nach einem der vorangehenden Ansprüche zur Herstellung von Turbinenschaufeln.

12. Verfahren zur Erzeugung einer kontinuierlichen, zweidimensionalen, spiralförmigen Führungsbahn (7) nach Anspruch 2
dadurch gekennzeichnet, dass
zunächst erste Hilfslinien (3) erzeugt werden, die gleich elektrostatischen Feldlinien (3) zwischen dem Profil (2') des Fertigteils (2) und dem Profil des Rohteils (1) verlaufen
und mittels diesen elektrostatischen Feldlinien (3) eine spiralförmige Führungsbahn (7) erzeugt wird, die gleich einer kontinuierlichen Variierung des elektrostatischen Potentials zwischen dem Profil des Rohteils (1) und dem Profil des Fertigteils (2) am Profil des Rohteils (1) beginnt und das Fertigteil (2) kontinuierlich und spiralförmig umläuft bis das Profil (2') des Fertigteils (2) erreicht wird.

13. Verfahren zur Erzeugung einer kontinuierlichen, zweidimensionalen, spiralförmigen Führungsbahn (7) nach Anspruch 2
dadurch gekennzeichnet, dass
zunächst erste Hilfslinien (3) erzeugt werden, die gleich elektrostatischen Feldlinien (3) zwischen dem Profil (2') des Fertigteils (2) und dem Profil des Rohteils (1) verlaufen
und weitere Hilfslinien erzeugt werden, die gleich elektrostatischen Äquipotentiallinien (6) das Fertigteil (2) umlaufen, und durch lokale Änderung der Äquipotentiallinien (6) eine Verbindung zwischen den einzelnen Äquipotentiallinien (6) gebildet wird und die miteinander verbundenen Äquipotentiallinien die spiralförmige Führungsbahn (7) ergeben.

14. Verfahren zur Erzeugung einer kontinuierlichen, dreidimensionalen, spiralförmigen Führungsbahn (7') nach Anspruch 2
dadurch gekennzeichnet, dass
Hilfslinien erzeugt werden, die gleich elektrostatischen Feldlinien zwischen der Fläche des Rohteils (1) und der Fläche des Fertigteils (2) verlaufen, und mittels dieser Feldlinien Führungsflächen erzeugt werden, die gleich Äquipotentialflächen zu diesen Feldlinien zwischen der Fläche des Fertigteils (2) und der Fläche des Rohteils (1) liegen,
und entlang den Äquipotentialflächen dreidimensionale Spiralkurven erzeugt werden, welche die spiralförmigen Führungsbahnen (7') ergeben.

## Claims

1. Milling method for producing any desired finished part (2) from any desired blank (1) by means of a milling tool, characterized in that the milling tool is guided along a continuous, spiral guide path (7, 7') from the outer contour of the blank (1) to the contour (2') of the finished part (2) and a continuous change of form from the blank (1) to the finished part (2) is achieved with continuous material removal.

2. Milling method according to Claim 1, characterized in that the continuous guide path (7, 7') is designed as a two-dimensional, flat, spiral guide path (7) or as a three-dimensional, spiral guide path (7').

3. Milling method according to Claim 2, characterized in that the milling tool is continuously guided along a first two-dimensional, spiral guide path (7) between the profile line of the blank (1) and the profile line (2') of the finished part (2) and as a result a slice of material is continuously removed, the milling tool is then brought back again to the profile line of the blank (1), is displaced along the longitudinal axis of the finished part (2), and a slice of material is again continuously removed along a further spiral, two-dimensional guide path (7) down to the profile line (2') of the finished part (2), and this operation is repeated until the entire length of the finished part (2) has been milled.

4. Milling method according to Claim 3, characterized in that the two-dimensional, spiral guide paths (7) covered along the longitudinal axis of the finished part (2) are in each case the same.

5. Milling method according to Claim 3, characterized in that the two-dimensional, spiral guide paths (7) covered along the longitudinal axis of the finished part (2) are in each case different.

6. Milling method according to Claim 2, characterized in that the milling tool is guided along a first three-dimensional, spiral guide path (7') in a longitudinal direction of the finished part (2) and, after reaching the end of the finished part (2), is lifted from the latter and is moved through the air to the start of a next deeper-set three-dimensional, spiral guide path (7') and moved along this guide path (7'), and this operation is repeated until the profile (2') of the finished part (2) has been reached.

7. Milling method according to Claim 2, characterized in that the milling tool is moved along a first three-dimensional, spiral guide path (7') in a longitudinal direction of the finished part (2) and, after reaching the end of the finished part (2), is moved along a two-dimensional, spiral guide path (7) to the next deeper-set three-dimensional, spiral guide path (7') and is then moved along this three-dimensional guide path in the opposite longitudinal direction, and this operation is repeated until the profile (2') of the finished part (2) has been reached.

8. Milling method according to one of the preceding claims, characterized in that, during the milling, the axis (10) of the milling tool (8) is inclined forwards by a plunge angle from the normal vector (11) at the point of contact (9) of the milling tool (8) on the machined surface of the blank (1) in the direction of the guide path (7, 7') and is tilted sideways from the guide path (7, 7') by an angle of inclination from the normal vector (11), and the milling path (12) resulting from the milling is different from the guide path (7, 7').

9. Milling method according to one of the preceding claims, characterized in that the entire milling method from the blank (1) to the finished part (2) is effected in a single set-up.

10. Milling method according to one of the preceding claims, characterized in that a ceramic milling tool is used for the milling method.

11. Use of the milling method according to one of the preceding claims for producing turbine blades.

12. Method of producing a continuous, two-dimensional, spiral guide path (7) according to Claim 2, characterized in that first of all first auxiliary lines (3) are produced, and these first auxiliary lines (3) run like electrostatic field lines (3) between the profile (2') of the finished part (2) and the profile of the blank (1), and a spiral guide path (7) is produced by means of these electrostatic field lines (3), and this spiral guide path (7) starts at the profile of the blank (1) like a continuous variation of the electrostatic potential between the profile of the blank (1) and the profile of the finished part (2) and runs continuously and spirally around the finished part (2) until the profile (2') of the finished part (2) is reached.

13. Method of producing a continuous, two-dimensional, spiral guide path (7) according to Claim 2, characterized in that first of all first auxiliary lines (3) are produced, and these first auxiliary lines (3) run like electrostatic field lines (3) between the profile (2') of the finished part (2) and the profile of the blank (1), and further auxiliary lines are produced, and these further auxiliary lines run around the finished part (2) like electrostatic equipotential lines (6), and a connection between the individual equipotential lines (6) is formed by a local change in the equipotential lines (6), and the equipotential lines connected to one another result in the spiral guide path (7).

14. Method of producing a continuous, three-dimensional, spiral guide path (7') according to Claim 2, characterized in that auxiliary lines are produced, and these auxiliary lines run like electrostatic field lines between the surface of the blank (1) and the surface of the finished part (2), and guide surfaces are produced by means of these field lines, and these guide surfaces lie like equipotential surfaces with respect to these field lines between the surface of the finished part (2) and the surface of the blank (1), and three-dimensional spiral curves are produced along the equipotential surfaces, and these three-dimensional curves result in the spiral guide paths (7').

## Revendications

1. Procédé de fraisage pour la fabrication d'une pièce finie quelconque (2) à partir d'une pièce brute quelconque (1) au moyen d'un outil de fraisage, caractérisé en ce que l'outil de fraisage est guidé le long d'une piste de guidage (7, 7') continue en spirale depuis le contour extérieur de la pièce brute (1) jusqu'au contour (2') de la pièce finie (2) et une modification continue de la forme de la pièce brute (1) à la pièce finie (2) est obtenue par enlèvement de matière continu.

2. Procédé de fraisage selon la revendication 1, caractérisé en ce que la piste de guidage continue (7, 7') est formée en tant que piste de guidage (7) bidimensionnelle, plane, spirale, ou en tant que piste de guidage (7') tridimensionnelle spirale.

3. Procédé de fraisage selon la revendication 2, caractérisé en ce que l'outil de fraisage est guidé en continu le long d'une première piste de guidage (7) bidimensionnelle spirale entre la ligne de profil de la pièce brute (1) et la ligne de profil (2') de la pièce finie (2) et une tranche de matière est de ce fait enlevée en continu, l'outil de fraisage est ensuite ramené sur la ligne de profil de la pièce brute (1), déplacé le long de l'axe longitudinal de la pièce finie (2) et à nouveau une tranche de matière est enlevée en continu le long d'une piste de guidage (7) supplémentaire bidimensionnelle spirale jusqu'à la ligne de profil (2') de la pièce finie (2), et ce processus est répété jusqu'à ce que toute la longueur de la pièce finie (2) ait été fraisée.

4. Procédé de fraisage selon la revendication 3, caractérisé en ce que les pistes de guidage (7) continues bidimensionnelles spirales sont toutes égales le long de l'axe longitudinal de la pièce finie (2).

5. Procédé de fraisage selon la revendication 3, caractérisé en ce que les pistes de guidage (7) continues bidimensionnelles spirales sont toutes différentes le long de l'axe longitudinal de la pièce finie (2).

6. Procédé de fraisage selon la revendication 2, caractérisé en ce que l'outil de fraisage est guidé le long d'une première piste de guidage (7') tridimensionnelle spirale dans une direction longitudinale de la pièce finie (2) et après avoir atteint le bout de la pièce finie (2), est soulevé de celle-ci et est déplacé à travers l'air jusqu'au début d'une piste de guidage (7') tridimensionnelle spirale plus profonde suivante et le long de cette piste de guidage (7') et ce processus est répété jusqu'à ce que le profil (2') de la pièce finie (2) ait été atteint.

7. Procédé de fraisage selon la revendication 2, caractérisé en ce que l'outil de fraisage est déplacé le long d'une première piste de guidage (7') tridimensionnelle spirale dans la direction longitudinale de la pièce finie (2) et après avoir atteint le bout de la pièce finie (2) est déplacé le long d'une piste de guidage (7) bidimensionnelle spirale jusqu'à la piste de guidage (7') tridimensionnelle spirale plus profonde suivante et est alors déplacé le long de cette piste de guidage tridimensionnelle dans la direction longitudinale opposée et ce processus est répété jusqu'à ce que le profil (2') de la pièce finie (2) ait été atteint.

8. Procédé de fraisage selon l'une quelconque des revendications précédentes, caractérisé en ce que pendant le fraisage, l'axe (10) de l'outil de fraisage (8) peut être incliné d'un angle de piqué du vecteur normal (11) au point de contact (9) de l'outil de fraisage (8) sur la surface usinée de la pièce brute (1) vers l'avant dans la direction de la piste de guidage (7, 7'), ainsi que basculé d'un angle d'inclinaison par rapport au vecteur normal (11), latéralement depuis la piste de guidage (7, 7'), et la piste de fraisage (12) résultant de ce fraisage est différente de la piste de guidage (7, 7').

9. Procédé de fraisage selon l'une quelconque des revendications précédentes, caractérisé en ce que l'ensemble du procédé de fraisage s'effectue avec une seule fixation de la pièce brute (1) jusqu'à la pièce finie (2).

10. Procédé de fraisage selon l'une quelconque des revendications précédentes, caractérisé en ce que l'on utilise un outil de fraisage céramique pour le procédé de fraisage.

11. Procédé de fraisage selon l'une quelconque des revendications précédentes pour la fabrication d'aubes de turbines.

12. Procédé de fabrication d'une piste de guidage (7) continue, bidimensionnelle, en spirale, selon la revendication 2, caractérisé en ce que l'on produit tout d'abord des premières lignes d'aide (3) qui s'étendent de la même manière que des lignes de champ électrostatiques (3) entre le profil (2') de la pièce finie (2) et le profil de la pièce brute (1), et l'on produit au moyen de ces lignes de champ électrostatiques (3) une piste de guidage spirale (7) qui commence sur le profil de la pièce brute (1) comme une variation continue du potentiel électrostatique entre le profil de la pièce brute (1) et le profil de la pièce finie (2) et entoure la pièce finie (2) en continu et en spirale jusqu'à ce que le profil (2') de la pièce finie (2) soit atteint.

13. Procédé de fabrication d'une piste de guidage (7) continue, bidimensionnelle, en spirale, selon la revendication 2, caractérisé en ce que l'on produit tout d'abord des premières lignes d'aide (3) qui s'étendent de la même manière que des lignes de champ électrostatiques (3) entre le profil (2') de la pièce finie (2) et le profil de la pièce brute (1), et l'on produit des lignes d'aide supplémentaires qui entourent la pièce finie (2) à la manière de lignes d'équipotentiel électrostatiques (6), et l'on crée par une modification locale des lignes d'équipotentiel (6) une connexion entre les lignes d'équipotentiel individuelles (6), et les lignes d'équipotentiel reliées ensemble donnent la piste de guidage spirale (7).

14. Procédé de fabrication d'une piste de guidage (7') continue, tridimensionnelle, en spirale, selon la revendication 2, caractérisé en ce que l'on produit des lignes d'aide qui s'étendent de la même manière que des lignes de champ électrostatiques entre la surface de la pièce brute (1) et la surface de la pièce finie (2), et au moyen desquelles lignes de champ des surfaces de guidage sont produites, lesquelles se situent comme des surfaces d'équipotentiel de ces lignes de champ entre la surface de la pièce finie (2) et la surface de la pièce brute (1), et des courbes spirales tridimensionnelles sont créées le long des surfaces d'équipotentiel, lesquelles donnent les pistes de guidage (7') en spirale.
